# NEUE EUROPÄISCHE PATENTSCHRIFT

(11) **EP 0 683 735 B2**
(45) Veröffentlichungstag und Bekanntmachung des Hinweises auf die Entscheidung über den Einspruch: **31.01.2001**
(45) Hinweis auf die Patenterteilung: 16.07.1997
(21) Anmeldenummer: 94906161.8
(22) Anmeldetag: 27.01.1994
(51) Int. Cl.: B60C 17/06

(54) **NOTLAUFRING FÜR EIN FAHRZEUGRAD**
EMERGENCY RIM RING FOR A VEHICLE WHEEL
ANNEAU DE SECOURS POUR JANTE DE ROUE DE VEHICULE

(30) Priorität: 10.02.1993 DE 4303922
(43) Veröffentlichungstag der Anmeldung: 29.11.1995
(73) Patentinhaber: Bayerische Motoren Werke Aktiengesellschaft, 80788 München (DE)
(72) Erfinder: BOCK, Andreas, D-85375 Neufahrn (DE); BINDER, Horst, D-80939 München (DE); KUNZ, Martin, D-80995 München (DE)
(74) Vertreter: Schernhammer, Herbert
(86) Internationale Anmeldenummer: EP9400231
(87) Internationale Veröffentlichungsnummer: WO9418016

(56) Entgegenhaltungen:
- EP-A- 0 142 844
- DE-A- 3 634 459
- DE-U- 8 325 913
- FR-A- 2 085 827
- FR-A- 2 391 086
- US-A- 3 872 907

## Beschreibung

Die Erfindung bezieht sich auf einen Notlaufring mit einem Fahrzeugrad nach dem Oberbegriff des Anspruchs 1.

Aus der US 3,814,158 A ist ein Notlaufring der eingangs genannten Art bekannt, der an seiner Innenseite mittig eine umlaufende, ringförmige Aussparung aufweist. Durch diese Aussparung wird der bekannte Notlaufring felgenbettseitig in zwei Hälften unterteilt, die jeweils im Bereich der Reifenwülste auf dem Luftreifen aufliegen.

Da der Notlaufring beiderseits auf den Reifenwülsten aufliegt, muß er im Mittenbereich durch die Aussparung so weit nachgiebig sein, daß die Montage des Luftreifens möglich ist. Die für die Montage erforderliche Weichheit des Notlaufrings wirkt sich bei Rotation des Fahrzeugrades nachteilig aus, da insbesondere bei höheren Raddrehzahlen der Notlaufring labil wird und sich in radialer Richtung aufweitet. Die auch aus Gründen der Montierbarkeit relativ weit außen liegenden Verstärkungseinlagen können eine Aufweitung des weiter innen liegenden elastischen Materials des Notlaufrings nicht verhindern. Daher besteht die Gefahr, daß sich der bekannte Notlaufring im Normalbetrieb (das heißt mit ausreichendem Betriebsdruck im Luftreifen) relativ zur Felge bewegt, hierdurch Verschleiß und Temperaturerhöhung hervorruft und insbesondere auch eine Unwucht erzeugt. Im Notlauffall ist der Notlaufring zu labil, um die Radaufstandskraft gezielt auf den Bereich der Reifenwülste zu übertragen und hierdurch den Luftreifen auf der Felge zu halten. Vielmehr werden die beiden ringförmigen Hälften des Notlaufringes zur Mitte in Richtung der Aussparung auswandern und die Reifenwülste nur noch unzureichend fixieren.

Der vorliegenden Erfindung liegt deshalb die Aufgabe zugrunde, einen gattungsgemäßen Notlaufring so auszubilden, daß er trotz leichter Montierbarkeit fest am Fahrzeugrad sitzt und im Notlauffall den Luftreifen an der Felge fixiert.

Diese Aufgabe wird durch die kennzeichnenden Merkmale des Anspruchs 1 gelöst.
Kerngedanke ist es hierbei, den Notlaufring so auszubilden, daß er sich im unbelasteten Zustand ausschließlich am Felgenbett abstützt. Hierdurch ist es möglich, eine entsprechend große Vorspannung in radialer Richtung zu erzeugen, so daß der Notlaufring sich gegenüber der Felge nicht verdreht. Durch das Tiefbett und die elastische Verformbarkeit des Notlaufringes bleibt die Montierbarkeit gewährleistet. Der Abstand zwischen zumindest einer Seitenfläche des Notlaufringes und dem Luftreifen ist erforderlich, um sicherzustellen, daß sich der Notlaufring nur am Felgenbett abstützt. Außerdem wird durch diesen Abstand die Montage des Luftreifens erleichtert.

Zwar ist aus der DE-OS 27 22 885 ein Notlaufring bekannt, der sich am Felgenbett abstützt, jedoch liegt dieser Notlaufring gleichzeitig im unteren Bereich der Seitenwände des Luftreifens kraftschlüssig auf. Hierdurch wird die aufbringbare Vorspannung in radialer Richtung stark begrenzt, da die Kombination aus Notlaufring und Luftreifen montierbar bleiben muß. Verstärkungseinlagen zu Verminderung der Aufweitung des Notlaufringes unter Fliehkraftbeanspruchung fehlen vollends.
Auch der aus der DE 84 32 017 U1 bekannte Notlaufring stützt sich sowohl am Luftreifen als auch dem Felgenbett ab. Die relativ dünnwandige Form dieses Notlaufringes erleichtert zwar die Montage, ist aber weder in der Lage, eine ausreichende radiale Vorspannung aufzubringen, noch im Notlauffall die Radlast sicher zu übertragen.
Der aus der DE 33 41 969 A1 bekannte Notlaufring ist fest mit dem Felgenbett verbunden, z. B. durch Verschweißung oder Verschraubung. Aufgrund seiner fehlenden Elastizität (Stahlnotlaufring) und der starren Anordnung am Fahrzeugrad liegt gegenüber dem erfindungsgemäßen Notlaufring eine vollkommen andersartige Konstruktion vor. Der starre Aufbau dieses Notlaufringes erfordert beidseitig einen entsprechend großen Abstand zu den Felgenhörnern des Rades, um die Montierbarkeit des Luftreifens zu gewährleisten.

Ferner zeigt die US 3,872,907 A in ihrer Figur 10 einen einteiligen Notlaufring, der in engem Abstand zu den benachbarten Seitenwandbereichen des Luftreifens verläuft. Dieser Notlaufring ist jedoch für zwei- oder mehrteilige Felgen konzipiert und stützt sich im eigentlichen Sinn nicht am Felgenbett ab, sondern ist vielmehr an der Felge befestigt. Dieselbe Schrift sieht für einteilige Felgen (Figuren 11 und 13) hingegen geteilte Notlaufringe vor, deren Hälften über durch Zugseile betätigbare Spannarme in ihrer Position gehalten werden.

Durch die vorteilhafte Ausbildung der Erfindung gemäß Anspruch 2 ist der Notlaufring - zumindest nach einer Seite - auch in axialer Richtung fixiert. Dieser Formschluß durch das Tiefbett ist insbesondere bei luftarmem Reifen und gleichzeitiger Kurvenfahrt, d. h. dem Auftreten von Seitenkräften, von Bedeutung.
Der Vorsprung des aus der DE-OS 27 22 885 bekannten Notlaufringes stellt keine Sicherung gegen axiale Verschiebung dar, da sich der Vorsprung im montierten Zustand des Notlaufrings am Felgenhochbett abstützt.

Die wulstartig vorstehenden ringförmigen Auflagebereiche gemäß Anspruch 3 erleichtern die Montage des erfindungsgemäßen Notlaufringes: Aufgrund ihrer geringen Breitenerstreckung sind diese Auflagebereiche relativ kompressibel, wobei der Freiraum zwischen den Auflagebereichen auch der Aufnahme des komprimierten elastischen Materials dient. Zudem erleichtert der Freiraum die Montage, da das Aufziehen des Notlaufringes in zwei Schritten erfolgen kann. Die Massenkonzentration außerhalb der Auflagebereiche hingegen stellt einen massiven und auch gegen Scherkräfte steifen Tragkörper dar, der seine Form auch unter Querkrafteinfluß nur geringfügig verändert.

Die Geometrie des erfindungsgemäßen Notlaufringes (Anspruch 4 bis 6) sorgt für einen sicheren Halt des Luftreifens auf der Felge:
Die seitlich ausbauchende Form des Notlaufringes (Anspruch 4) schafft Anlaufflächen, die ein Abziehen des Luftreifens bei Kurvenfahrt und luftarmem Luftreifen erschweren. Dadurch, daß die Kontur des Notlaufringes zumindest an einer Seite, bevorzugt der Tiefbettseite, der Kontur des Luftreifens folgt, ergibt sich ein "Formschluß auf Abstand" gegen Herausrutschen der Reifenwülste.
Im Gegensatz zur Breitenerstreckung des aus der DE 33 41 969 A1 bekannten Notlaufringes genügt es bei der vorliegenden Erfindung gemäß Anspruch 5 jedoch, für die Montierbarkeit des Luftreifens einen Abstand d_{aH} in der Größenordnung von etwas weniger als der einfachen Reifenwulstdicke vorzusehen, da der Notlaufring innerhalb bestimmter Grenzen elastisch verformbar und axial auf der Felge verschieblich ist.
Die Gesamtbreite des Notlaufringes (Anspruch 6) ist so zu wählen, daß die Seitenwände des Luftreifens im Notlauffall auch unter Kurvenfahrt durch Anlage am Notlaufring zwangsweise leicht schräg nach außen oder senkrecht stehen, jedoch nicht schräg nach innen ausweichen können, da hierdurch das Abziehen des Luftreifens eingeleitet würde. Im Notlauffall, d. h. bei drucklosem Luftreifen, werden zudem die Seitenbereiche des Notlaufringes infolge der Kompression durch die Radlast etwas nach außen verlagert, wodurch der Abstand zwischen Notlaufring und Luftreifen noch geringer wird, Notlaufring und Reifenwulstbereich unter Umständen zur Anlage kommen, so daß die Reitenwülste nicht von den Felgenschultern abgezogen werden können. Durch die kleinen Abstände dₐ und d_{aH} wird also vermieden, daß die Wülste ins Tiefbett rutschen, womit das gefährliche Abwerfen eines Reifens eingeleitet würde.

Ein nach Anspruch 7 dimensionierter Notlaufring verhindert, daß im Notlauffall die nach außen ausbauchenden Seitenwände des Luftreifens sich an ihrer Innenseite berührend übereinanderlegen. Hierdurch wird übermäßiger Verschleiß und entsprechende Reifenerhitzung vermieden.

Das Merkmal des Anspruchs 8 trägt zwei grundsätzlichen Anforderungen an Notlaufringe in vorteilhafter Weise Rechnung: Zum einen darf der Durchmesser der Verstärkungseinlagen nur so klein sein, daß der Notlaufring montierbar bleibt. Zum anderen ist die Menge elastischen Materials innerhalb der Verstärkungseinlagen gering zu halten, um eine entsprechend große Vorspannung auf dem Felgenbett und damit eine geringe Aufweitung unter Fliehkraft zu gewährleisten, das heißt, Festsitz des Notlaufrings auch bei hohen Geschwindigkeiten zu garantieren.

Durch die vorteilhafte Ausgestaltung der Erfindung nach Anspruch 9 wird das Auswuchten der Einheit aus Rad, Luftreifen und Notlaufring auf einer Wuchtmaschine erleichtert.

Formschlußerzeugende Ausgestaltungen gemäß Anspruch 10 sind beispielsweise als Vertiefungen und Vorsprünge aus der DE 36 34 459 A1 bekannt und verhindern eine Verdrehung des Notlaufringes auf der Felge auch unter Extrembedingungen. Solche Bedingungen liegen beispielsweise vor, wenn Fahrzeugräder für sehr hohe Geschwindigkeiten konzipiert sind, da der Fliehkrafteinfluß zu einer entsprechenden Aufweitung des Notlaufrings führt. Auch extreme Trägheitskräfte, wie z. B. durchdrehende Räder auf Glatteis oder blokkierende Räder während einer Vollbremsung, können eine Verdrehung des Notlaufringes auf der Felge verursachen. Durch die formschlußerzeugenden Ausgestaltungen wird diese Verdrehung zuverlässig verhindert; übermäßiger Verschleiß, hohe Temperaturen und Unwucht des ehemals in seiner Gesamtheit ausgewuchteten Rades werden auf diese Weise vermieden.

Die vorteilhafte Weiterbildung der Erfindung nach Anspruch 11 verhindert axiales Wandern des Notlaufringes auf der Felge. Die axiale Fixierung kann z. B. durch einen niedrigen Hump oder durch Höcker, die am Felgenbett angeordnet sind, verhindert werden. Bei Ausgestaltung des Notlaufringes nach Anspruch 2 ist die axiale Fixierung nur noch in einer Richtung erforderlich.

Aussparungen gemäß Anspruch 12 erleichtern Relativbewegungen zwischen der Außenseite des Notlaufrings und der Innenseite des Luftreifens, die aufgrund der unterschiedlichen Durchmesser zwangsläufig auftreten. Des weiteren wird durch die Aussparungen (beispielsweise in Form V-förmiger Kerben) das Gewicht des Notlaufrings reduziert und die Montage durch die verbesserte Verformbarkeit in radialer Richtung erleichtert. Außerdem ist für die Fahrzeuginsassen infolge der durch die Aussparung verursachten Abrollungleichförmigkeiten ein eingetretener Notlauffall sofort erkennbar.

Ein mögliches Ausführungsbeispiel der Erfindung wird anhand von Zeichnungen nachfolgend näher erläutert. Es zeigt:

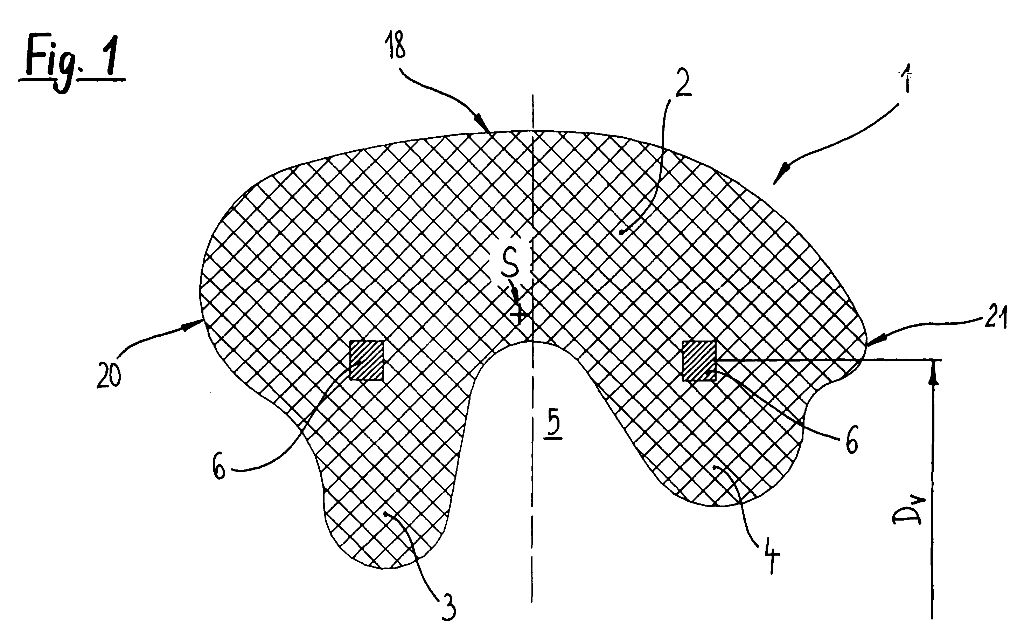

- Figur 1: einen erfindungsgemäßen Notlaufring im Querschnitt und

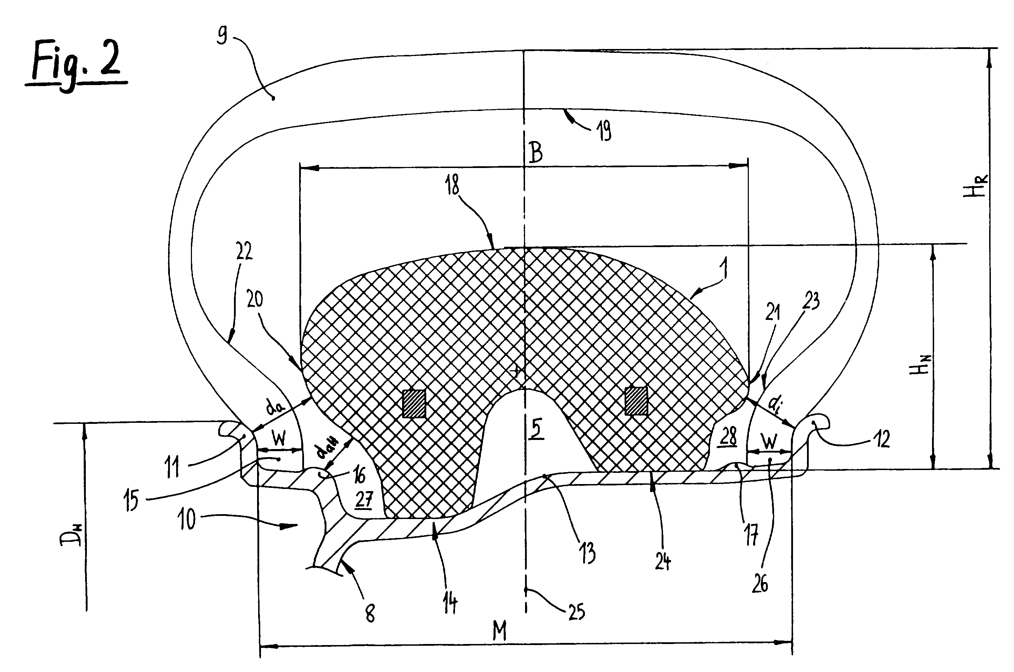

- Figur 2: eine der Figur 1 entsprechende Darstellung eines auf ein Rad mit einem Luftreifen montierten Notlaufringes.

Die Figuren 1 und 2 zeigen einen erfindungsgemäßen Notlaufring 1 für sich bzw. im montierten Zustand. Aus Gründen der Übersichtlichkeit wurde jeweils auf die Darstellung der außerhalb der Schnittebene liegenden umlaufenden Kanten verzichtet.
Der Notlaufring 1 ist ein einstückiges Gebilde aus einem elastischen Material mit relativ hohem E-Modul und setzt sich aus einem massiven Tragkörper 2 sowie einem äußeren und einem inneren Tragring 3 bzw. 4 zusammen. Zwischen den beiden Tragringen 3 und 4 befindet sich eine umlaufende Aussparung 5. An den Übergangsbereichen der beiden Tragringe 3 und 4 in den Tragkörper 2 sind ringförmige Verstärkungseinlagen 6 eingesetzt, die sich beispielsweise aus einzelnen Stahldrähten zusammensetzen.

Figur 2 zeigt ein Fahrzeugrad 8 mit montiertem Luftreifen 9 und Notlaufring 1. Das Rad 8 besitzt eine einteilige Tiefbettfelge 10 mit einem äußeren und einem inneren Felgenhorn 11 bzw. 12. Das Tiefbett 14 des Felgenbettes 13 befindet sich an der Außenseite der Felge 10. Die Reifenwülste 15 und 26 werden auf der Felge 10 zwischen den Felgenhörnern 11, 12 und einem äußeren und inneren Hump 16 bzw. 17 auf den Felgenschultern gehalten.

Die Außenseite 18 des Notlaufrings 1 liegt der der Lauffläche des Luftreifens 9 abgewandten Reifeninnenseite 19 gegenüber. Äußere und innere Seitenflächen 20 bzw. 21 des Notlaufringes 1 sind konkav gewölbt und in ihrer Kontur ähnlich den benachbarten äußeren und inneren Seitenwandbereichen 22 bzw. 23 des Luftreifens 9.

Die besondere Funktionalität des erfindungsgemäßen Notlaufringes 1 ergibt sich aus seiner Geometrie und seinem Aufbau:
Für festen Sitz auf der Felge 10 sorgen die Verstärkungseinlagen 6, deren Durchmesser D_{V} nur geringfügig größer ist als der Felgenhorndurchmesser D_{H}. Auf diese Weise wird erreicht, daß auch bei hohen Raddrehzahlen die Aufweitung des Notlaufringes 1 gering ist und die innerhalb der Verstärkungseinlagen 6 angeordneten Teilmassen des Notlaufringes 1 noch eine ausreichende Vorspannung auf die Felge 10 ausüben, um einen verdrehungssicheren Sitz zu gewährleisten. Die äußere und innere Abstand dₐ bzw. dᵢ zwischen dem Notlaufring 1 und den betreffenden Felgenhörnern 11 bzw. 12 ist so gering, daß es im Notlauffall, d. h. wenn die Flächen 18 und 19 aneinander liegen, durch die Verformung des Tragkörpers 2 auch zu einer Anlage zwischen Notlaufring 1 und den Seitenwandbereichen 22 bzw. 23 kommt. Auf diese Weise werden die Reifenwülste 15 und 26 daran gehindert, ihre in Figur 2 dargestellte Lage zu verlassen.
Auch bei einer weiteren kritischen Fahrsituation, nämlich der Kurvenfahrt mit luftarmem Reifen 9, bleibt die Kombination aus Rad 8 und Luftreifen 9 voll funktionsfähig, da die konkav gewölbten Seitenflächen 20 und 21 des Notlaufringes 1 ein Abziehen des Luftreifens 9 von der Felge 10 verhindern.
Der geringe Abstand dₐ bzw. dᵢ steht der Montierbarkeit des Luftreifens 9 auf die Felge 10 nicht entgegen, da der Notlaufring 1 während der Montage axial im Felgenbett 13 verschieblich ist. Hierdurch ist es möglich, die Breite B des Notlaufringes 1 größer zu wählen als die Differenz aus der Felgenmaulbreite M und der doppelten Reifenwulstdicke W.

Der Abstand d_{aH} zwischen der äußeren Seitenfläche 20 des Notlaufrings 1 und dem Bereich des äußeren Humps 16 ist idealerweise etwas kleiner als die Breite W des äußeren Reifenwulstes 15. Hierdurch ist die Montage des Luftreifens 9, bei welcher der äußere Reifenwulst 15 in den freien Ringraum 27 des Tiefbetts 14 eintaucht, durch elastische Verformung des Tragrings 3 noch ohne weiteres möglich. Im Notlauffall wird der Notlaufring 1 durch Kompression so weit verformt, daß sich der Abstand d_{aH} auf ein Maß verringert, das ein Abrutschen des Wulstes 15 ins Tiefbett 14 verhindert und somit den Luftreifen 9 auf der Felge 10 hält.
Auch an der Innenseite des Notlaufrings 1 ist ein freier Ringraum 28 vorgesehen, der dem Umstand Rechnung trägt, daß der innere Wulst 26 während der Montage des Luftreifens 9 zunächst innerhalb des inneren Humps 17 liegt und sich erst am Schluß durch Beaufschlagung des Inneren des Luftreifens 9 mit Überdruck aus Felgenhorn 12 anlegt.
Die Höhe H_{N} des montierten unbelasteten Notlaufringes 1 (gemessen zwischen Hochbett 24 und Außenseite 18) entspricht in etwa der halben Reifenhöhe H_{R}. Der Schwerpunkt S des Notlaufringes liegt idealerweise nahe der Mittelebene 25 der Felge 10 (Erleichterung des Auswuchtens) und im Bereich des Durchmessers D_{V} (Minimierung der fliehkraftbedingten Aufweitung).

## Patentansprüche

1. Notlaufring (1) mit einem Fahrzeugrad (5), das sich aus einer einteiligen Felge (10) und einem Luftreifen (9) zusammensetzt, bestehend aus einem einstückigen, ringförmigen Körper (2) aus elastischem Material, mit ringförmigen Verstärkungseinlagen (6) und mit einer Außenseite (18), auf der im Notlauffall die der Lauffläche abgewandte Innenseite des Luftreifens aufliegt, einer äußeren und einer inneren Seitenfläche (20, 21) sowie einer dem Felgenbett (13) zugewandten Innenseite,
dadurch gekennzeichnet, dass die Innenseite des Notlaufringes (1) sich ausschließlich am Felgenbett (13) abstützt und zumindest eine Seitenfläche (20, 21) des unbelasteten Notlaufringes (1) zum benachbarten Seitenwandbereich (22, 23) des Luftreifens (9) beabstandet ist.

2. Notlaufring nach Anspruch 1, für eine einteilige Tiefbettfelge,
dadurch gekennzeichnet, dass die Innenseite des Notlaufringes (1) sich zumindest mit einem Teil ihrer Fläche im Tiefbett (14) der Felge (10) abstützt.

3. Notlaufring nach Anspruch 1 und/oder Anspruch 2,
dadurch gekennzeichnet, dass die Innenseite des Notlaufringes (1) sich über zwei ringförmige Auflagebereiche (Tragringe (3), (4)) am Felgenbett (13) abstützt.

4. Notlaufring nach wenigstens einem der vorangegangenen Ansprüche,
dadurch gekennzeichnet, dass die Seitenflächen (20, 21) des Notlaufringes (1) konkav gewölbt sind und die Kontur zumindest einer Seitenfläche (20, 21) ähnlich der Kontur des ihr benachbarten Seitenwandbereiches (22, 23) des Luftreifens (9) ist.

5. Notlaufring nach wenigstens einem der vorangegangenen Ansprüche,
dadurch gekennzeichnet, dass der Abstand daH der äußeren Seitenfläche (20) des Notlaufringes (1) zur Felge (10) im Bereich des äußeren Humps (16) gleich oder kleiner ist als die Breite (W) des äußeren Reifenwulstes (15).

6. Notlaufring nach wenigstens einem der vorangegangenen Ansprüche,
dadurch gekennzeichnet, dass die Breite (B) des montierten, unbelasteten Notlaufringes (1) etwa der um die 0,5 bis 2fach Reifenwulstdicke (W) verminderte Felgenmaulbreite (M) beträgt.

7. Notlaufring nach wenigstens einem der vorangegangenen Ansprüche,
dadurch gekennzeichnet, dass die Höhen (H_{N}) des montierten, unbelasteten Notlaufringes (1) im Wesentlichen der halben Reifenhöhe (H_{R}) entspricht.

8. Notlaufring nach wenigstens einem der vorangegangenen Ansprüche,
dadurch gekennzeichnet, dass der Durchmesser (D_{V}) der Verstärkungseinlagen (6) nur geringfügig größer ist als der Felgenhorndurchmesser (D_{H}).

9. Notlaufring nach wenigstens einem der vorangegangenen Ansprüche,
dadurch gekennzeichnet, dass der Schwerpunkt (S) des montierten, unbelasteten Notlaufringes (1) in axialer Richtung nahe der Mittelebene (25) der Felge (10) liegt.

10. Notlaufring nach wenigstens einem der vorangegangenen Ansprüche,
dadurch gekennzeichnet, dass der Notlaufring (1) auf seiner Innenseite und/oder das Felgenbett (13) der Felge (10) jeweils in Umfangsrichtung Formschluss erzeugende Ausgestaltungen aufweist.

11. Notlaufring nach wenigstens einem der vorangegangenen Ansprüche,
dadurch gekennzeichnet, dass das Felgenbett (13) der Felge (10) in Umfangsrichtung zumindest abschnittsweise Ausgestaltungen aufweist, die mit dem Notlaufring (1) in axialer Richtung Formschluss erzeugen.

12. Notlaufring nach wenigstens einem der vorangegangenen Ansprüche,
dadurch gekennzeichnet, dass der Notlaufring (1) an seiner Außenseite (18) mehrere am Umfang verteilte, quer zur Umfangsrichtung verlaufende Aussparungen aufweist.

## Claims

1. An emergency rim ring (1) with a vehicle wheel (5) which comprises a one-part rim (10) and a pneumatic tyre (9), comprising a one-piece, annular body (2) of elastic material, with annular reinforcing inserts (6) and with an outer side (18) upon which the inner side of the pneumatic tyre facing away from the tread lies in an emergency case, outer and inner side faces (20, 21), as well as an inner side facing the rim well (13),
characterised in that the inner side of the emergency rim ring (1) is braced exclusively against the rim well (13) and at least one side face (20, 21) of the load-free emergency rim ring (1) is arranged at a distance from the neighbouring side wall region (22, 23) of the pneumatic tyre (9).

2. An emergency rim ring according to claim 1, for a one-piece drop centre rim,
characterised in that the inner side of the emergency rim ring (1) is braced over at least a part of its area in the drop centre (14) of the rim (10).

3. An emergency rim ring according to claim 1 and/or claim 2,
characterised in that the inner side of the emergency rim ring (1) is braced against the rim well (13) through two annular supporting areas (supporting rings (3), (4)).

4. An emergency rim ring according to at least one of the preceding claims,
characterised in that the side faces (20, 21) of the emergency rim ring (1) are concave and the contour of at least one side face (20, 21) is similar to the contour of its neighbouring side wall region (22, 23) of the pneumatic tyre (9).

5. An emergency rim ring according to at least one of the preceding claims,
characterised in that the distance (d_{aH}) between the outer side face (20) of the emergency rim ring (1) and the rim (10) in the region of the outer hump (16) is equal to or less than the width (W) of the outer tyre bead (15).

6. An emergency rim ring according to at least one of the preceding claims,
characterised in that the width (B) of the mounted, load-free emergency rim ring (1) is approximately equal to that of the rim (M) reduced by approximately 0.5 to 2 times the tyre bead thickness (W).

7. An emergency rim ring according to at least one of the preceding claims,
characterised in that the height (H_{N}) of the mounted, load-free emergency rim ring (1) substantially corresponds to half the tyre height (H_{R}).

8. An emergency rim ring according to at least one of the preceding claims,
characterised in that the diameter (D_{V}) of the reinforcing inserts (6) is only marginally greater than the diameter (D_{H}) of the rim flange.

9. An emergency rim ring according to at least one of the preceding claims,
characterised in that the centre of gravity (S) of the mounted, load-free emergency rim ring (1) in an axial direction lies close to the mid-plane (25) of the rim (10).

10. An emergency rim ring according to at least one of the preceding claims,
characterised in that the emergency rim ring (1) has positive engagement conferring means on its inner side and/or on the rim well (13) of the rim (10) in each case in a circumferential direction.

11. An emergency rim ring according to at least one of the preceding claims,
characterised in that the rim well (13) of the rim (10) in a circumferential direction has means along at least sections of it which confer positive connection with the emergency rim ring (1) in an axial direction.

12. An emergency rim ring according to at least one of the preceding claims,
characterised in that the emergency rim ring (1) is provided on its outer side (18) with a plurality of recesses distributed over its circumference and extending transversely to the circumferential direction.

## Revendications

1. Anneau de secours (1) combiné à une roue (5) de véhicule, constituée d'une jante monobloc (10) et d'un pneu (9), anneau qui est composé d'un corps (2) annulaire monobloc en matériau élastique, d'inserts annulaires de renforcement (6) et qui présente une face externe (18) sur laquelle s'appuie en cas d'urgence la face interne du pneu associée à la bande de roulement, des faces latérales externe et interne (20, 21) ainsi qu'une face interne en regard du fond (13)de jante,
caractérisé en ce que
la face interne de l'anneau de secours (1) est en appui par au moins une partie de sa surface sur le fond de jante (13) tandis qu'au moins une face latérale (20, 21) de l'anneau de secours (1) non chargé est située à une certaine distance de la zone de la paroi latérale voisine (22, 23) du pneumatique (9).

2. Anneau de secours selon la revendication 1, pour une jante creuse monobloc,
caractérisé en ce que
la face interne de l'anneau de secours (1) s'appuie par au moins une partie de sa surface dans la partie profonde (14) du fond de la jante (10).

3. Anneau de secours selon la revendication 1 et/ou 2,
caractérisé en ce que
la face interne de l'anneau (1) s'appuie par deux zones annulaires (anneaux porteurs (3) et (4)) sur le fond de jante (13).

4. Anneau de secours selon au moins une des revendications précédentes,
caractérisé en ce que
les faces latérales (20, 21) de l'anneau (1) sont bombées, le contour d'au moins une de ces faces étant analogue à celui de la partie de la paroi latérale voisine (22, 23) du pneu (9).

5. Anneau de secours selon au moins une des revendications précédentes,
caractérisé en ce que
la distance d_{aH} entre la face latérale externe (20) de l'anneau de secours (1) et la jante (10), au niveau du hump externe (16), est égale ou inférieure à la largeur (W) du talon externe (15) du pneu.

6. Anneau de secours selon au moins une des revendications précédentes,
caractérisé en ce que
la largeur (B) de l'anneau (1) monté et non chargé, est sensiblement égale à la largeur interne (M) de la jante, diminuée d'environ 0,5 à 2 fois l'épaisseur (W) du talon du pneu.

7. Anneau de secours selon au moins une des revendications précédentes,
caractérisé en ce que
la hauteur (H_{N}) de l'anneau (1) monté et non chargé, est sensiblement égale à la moitié de la hauteur (H_{R}) du pneu.

8. Anneau de secours selon au moins une des revendications précédentes,
caractérisé en ce que
le diamètre (D_{V}) des inserts de renforcement (6) est à peine supérieur au diamètre du rebord de la jante (D_{H}).

9. Anneau de secours selon au moins une des revendications précédentes,
caractérisé en ce que
le centre de gravité (S) de l'anneau (1) monté et non chargé, est situé, en direction axiale, près du plan médian (25) de la jante (10).

10. Anneau de secours selon au moins une des revendications précédentes,
caractérisé en ce que
l'anneau de sécurité (1), sur la face interne, et/ou le fond de jante (13) présentent chacun une configuration créant un verrouillage par combinaison de formes, en direction périphérique.

11. Anneau de secours selon au moins une des revendications précédentes,
caractérisé en ce que
le fond de jante (13) présente en direction périphérique au moins localement, des configurations créant en direction axiale un verrouillage par combinaison de formes avec l'anneau de secours (1).

12. Anneau de secours selon au moins une des revendications précédentes,
caractérisé en ce que
l'anneau de secours (1) présente, répartis périphériquement sur sa surface externe (18) plusieurs évidements transversaux par rapport à la direction périphérique.
